# EUROPEAN PATENT SPECIFICATION

(11) **EP 2 612 462 B1**
(45) Date of publication and mention of the grant of the patent: **23.04.2014**
(21) Application number: 11752690.5
(22) Date of filing: 17.08.2011
(51) Int. Cl.: H04L 1/16

(54) **AGGREGATED MPDU (A-MPDU) NUMEROLOGY AND MPDU GROUPING**
AGGREGIERTE MPDU (A-MPDU) NUMEROLOGIE UND MPDU-GRUPPIERUNG
NUMÉROLOGIE MPDU AGRÉGÉE (A-MPDU) ET GROUPAGE MPDU

(30) Priority: 16.08.2011 US 201113210579; 03.09.2010 US 374885 P
(43) Date of publication of application: 10.07.2013
(73) Proprietor: Qualcomm Incorporated, San Diego, CA 92121 (US)
(72) Inventor: WENTINK, Maarten Menzo, San Diego California 92121 (US); MERLIN, Simone, San Diego California 92121 (US); ABRAHAM, Santosh Paul, San Diego California 92121 (US); FREDERIKS, Guido Robert, San Diego California 92121 (US)
(74) Representative: Carstens, Dirk Wilhelm
(86) International application number: PCT/US2011/048137
(87) International publication number: WO 2012/030541

(56) References cited:
- EP-A1- 1 626 520
- WO-A2-02/32039

## Description

### BACKGROUND

### Field

Certain aspects of the present disclosure generally relate to wireless communications and, more particularly, to transmitting, receiving, and acknowledging media access control (MAC) protocol data units (MPDUs).

### Background

In order to address the issue of increasing bandwidth requirements demanded for wireless communications systems, different schemes are being developed to allow multiple user terminals to communicate with a single access point by sharing the channel resources while achieving high data throughputs. Multiple Input Multiple Output (MIMO) technology represents one such approach that has recently emerged as a popular technique for next generation communication systems. MIMO technology has been adopted in several emerging wireless communications standards such as the Institute of Electrical and Electronics Engineers (IEEE) 802.11 standard. The IEEE 802.11 denotes a set of Wireless Local Area Network (WLAN) air interface standards developed by the IEEE 802.11 committee for short-range communications (e.g., tens of meters to a few hundred meters).

A MIMO system employs multiple (*N_{T}*) transmit antennas and multiple (*N_{R}*) receive antennas for data transmission. A MIMO channel formed by the *N_{T}* transmit and *N_{R}* receive antennas may be decomposed into *N_{S}* independent channels, which are also referred to as spatial channels, where *N_{S}* ≤ min{*N*_{*T*,} *N_{R}*}*.* Each of the *N_{S}* independent channels corresponds to a dimension. The MIMO system can provide improved performance (e.g., higher throughput and/or greater reliability) if the additional dimensionalities created by the multiple transmit and receive antennas are utilized.

In wireless networks with a single Access Point (AP) and multiple user stations (STAs), concurrent transmissions may occur on multiple channels toward different stations, both in the uplink and downlink direction. Many challenges are present in such systems.

Attention is drawn to the document EP1626520 (A1) which describes a burst ACK method and apparatus in wireless communication environment. An ACK frame transmission method whereby plural frames are received from a transmitting device and receipt of the frames is acknowledged with a single ACK frame includes receiving frames from the transmitting device and storing identification information of the received frames; generating a first field by recording a set of bit pairs to each of the received frames with the use of the stored identification information; generating an ACK frame including the generated first field; and transmitting the generated ACK frame to the transmitting device, wherein a bit pair includes: a first bit to acknowledge whether any concerned frame is properly received; and a second bit to distinguish whether the first bit is to acknowledge receipt of the concerned frame from whether it is to acknowledge receipt of all the fragments following the concerned frame.

Attention is also drawn to document WO 02/32039, which describes a communication device including a processing unit and a transmitter. The processing unit specifies a number of data blocks in an ARQ receive window and divides the receive window into a number of sectors, each sector having a portion of the number of data blocks in the receive window. The processing unit further receives data blocks within the receive window transmitted from a transmitting communication device and constructs an acknowledgement bitmap for each sector in the receive window. The acknowledgement bitmap includes a sector acknowledgement bit. The transmitter transmits the acknowledgement bitmap for each sector to the transmitting communication device.

### SUMMARY

In accordance with the present invention a method, as set forth in claims 1 and 6, and an apparatus, as set forth in claims 5 and 13, is provided. Embodiments of the invention are claimed in the dependent claims.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 illustrates a diagram of a wireless communications network in accordance with certain aspects of the present disclosure.
FIG. 2 illustrates a block diagram of an example access point and user terminals in accordance with certain aspects of the present disclosure.
FIG. 3 illustrates a block diagram of an example wireless device in accordance with certain aspects of the present disclosure.
FIG. 4 illustrates example operations for transmitting aggregated MAC protocol data units (A-MPDUs) and receiving block acknowledgments (BAs), in accordance with certain aspects of the present disclosure.
FIG. 4A illustrates example means capable of performing the operations shown in FIG. 4.
FIG. 5 illustrates example operations for receiving and acknowledging A-MPDUs, in accordance with certain aspects of the present disclosure.
FIG. 5A illustrates example means capable of performing the operations shown in FIG. 5.
FIG. 6 illustrates an example MPDU frame structure with a MPDU group indication field, in accordance with certain aspects of the present disclosure.
FIG. 7 illustrates an example transmission of MPDUs with NULL MPDUs to fill out a group, in accordance with certain aspects of the present disclosure.
FIG. 8 illustrates example fields for a Block Ack Parameter Set, in accordance with certain aspects of the present disclosure,
FIG. 9 illustrates an example MPDU frame structure with a delimiter extension, in accordance with certain aspects of the present disclosure.
FIG. 10 illustrates an example delimiter extension, in accordance with certain aspects of the present disclosure.
FIG. 11 illustrates an example MPDU frame structure with a delimiter extension, in accordance with certain aspects of the present disclosure.
FIG. 12 illustrates an example transmission where a number of smaller frames have been grouped together sharing the same Very High Throughput (VHT) sequence number, in accordance with certain aspects of the present disclosure.
FIG. 13 illustrates an example MAC frame format, in accordance with certain aspects of the present disclosure.
FIG. 14 illustrates an example Frame Control field, in accordance with certain aspects of the present disclosure.
FIG. 15 illustrates an example Sequence Control field, in accordance with certain aspects of the present disclosure.
FIG. 16 illustrates an example MPDU delimiter augmented with Fragment End and Fragment Count fields, in accordance with certain aspects of the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

The word "exemplary" is used herein to mean "serving as an example, instance, or illustration." Any aspect described herein as "exemplary" is not necessarily to be construed as preferred or advantageous over other aspects.

Although particular aspects are described herein, many variations and permutations of these aspects fall within the scope of the disclosure. Although some benefits and advantages of the preferred aspects are mentioned, the scope of the disclosure is not intended to be limited to particular benefits, uses or objectives. Rather, aspects of the disclosure are intended to be broadly applicable to different wireless technologies, system configurations, networks and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

### AN EXAMPLE WIRELESS COMMUNICATION SYSTEM

The techniques described herein may be used for various broadband wireless communication systems, including communication systems that are based on an orthogonal multiplexing scheme. Examples of such communication systems include Spatial Division Multiple Access (SDMA), Time Division Multiple Access (TDMA), Orthogonal Frequency Division Multiple Access (OFDMA) systems, Single-Carrier Frequency Division Multiple Access (SC-FDMA) systems and so forth. An SDMA system may utilize sufficiently different directions to simultaneously transmit data belonging to multiple user terminals. A TDMA system may allow multiple user terminals to share the same frequency channel by dividing the transmission signal into different time slots, each time slot being assigned to different user terminal. An OFDMA system utilizes orthogonal frequency division multiplexing (OFDM), which is a modulation technique that partitions the overall system bandwidth into multiple orthogonal sub-carriers. These sub-carriers may also be called tones, bins, etc. With OFDM, each sub-carrier may be independently modulated with data. An SC-FDMA system may utilize interleaved FDMA (IFDMA) to transmit on sub-carriers that are distributed across the system bandwidth, localized FDMA (LFDMA) to transmit on a block of adjacent sub-carriers, or enhanced FDMA (EFDMA) to transmit on multiple blocks of adjacent sub-carriers. In general, modulation symbols are sent in the frequency domain with OFDM and in the time domain with SC-FDMA.

The teachings herein may be incorporated into (e.g., implemented within or performed by) a variety of wired or wireless apparatuses (e.g., nodes). In some aspects, a wireless node implemented in accordance with the teachings herein may comprise an access point or an access terminal.

An access point ("AP") may comprise, be implemented as, or known as Node B, Radio Network Controller ("RNC"), eNode B, Base Station Controller ("BSC"), Base Transceiver Station ("BTS"), Base Station ("BS"), Transceiver Function ("TF"), Radio Router, Radio Transceiver, Basic Service Set ("BSS"), Extended Service Set ("ESS"), Radio Base Station ("RBS"), or some other terminology.

An access terminal ("AT") may comprise, be implemented as, or known as an access terminal, a subscriber station, a subscriber unit, a mobile station, a remote station, a remote terminal, a user terminal, a user agent, a user device, user equipment, a user station, or some other terminology. In some implementations, an access terminal may comprise a cellular telephone, a cordless telephone, a Session Initiation Protocol ("SIP") phone, a wireless local loop ("WLL") station, a personal digital assistant ("PDA"), a handheld device having wireless connection capability, a Station ("STA"), or some other suitable processing device connected to a wireless modem. Accordingly, one or more aspects taught herein may be incorporated into a phone (e.g., a cellular phone or smart phone), a computer (e.g., a laptop), a portable communication device, a portable computing device (e.g., a personal data assistant), an entertainment device (e.g., a music or video device, or a satellite radio), a global positioning system device, or any other suitable device that is configured to communicate via a wireless or wired medium. In some aspects, the node is a wireless node. Such wireless node may provide, for example, connectivity for or to a network (e.g., a wide area network such as the Internet or a cellular network) via a wired or wireless communication link.

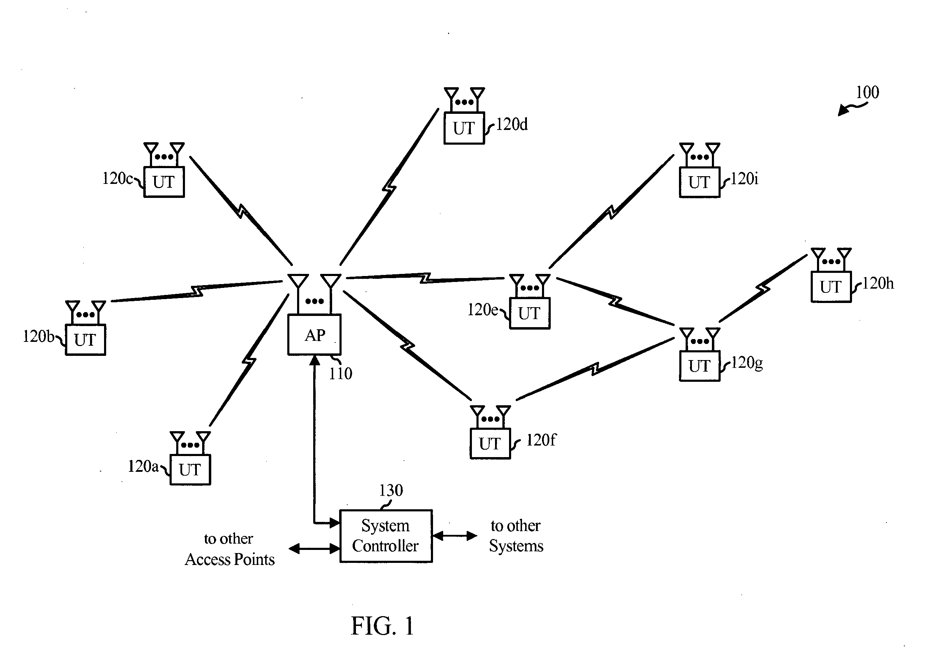

FIG. 1 illustrates a multiple-access multiple-input multiple-output (MIMO) system 100 with access points and user terminals. For simplicity, only one access point 110 is shown in FIG. 1. An access point is generally a fixed station that communicates with the user terminals, and may also be referred to as a base station or some other terminology. A user terminal may be fixed or mobile and may also be referred to as a mobile station, a wireless device or some other terminology. Access point 110 may communicate with one or more user terminals 120 at any given moment on the downlink and uplink. The downlink (i.e., forward link) is the communication link from the access point to the user terminals, and the uplink (i.e., reverse link) is the communication link from the user terminals to the access point. A user terminal may also communicate peer-to-peer with another user terminal. A system controller 130 couples to and provides coordination and control for the access points.

While portions of the following disclosure will describe user terminals 120 capable of communicating via Spatial Division Multiple Access (SDMA), for certain aspects, the user terminals 120 may also include some user terminals that do not support SDMA. Thus, for such aspects, an AP 110 may be configured to communicate with both SDMA and non-SDMA user terminals. This approach may conveniently allow older versions of user terminals ("legacy" stations) to remain deployed in an enterprise, extending their useful lifetime, while allowing newer SDMA user terminals to be introduced as deemed appropriate.

The system 100 employs multiple transmit and multiple receive antennas for data transmission on the downlink and uplink. The access point 110 is equipped with *Nₐₚ* antennas and represents the multiple-input (MI) for downlink transmissions and the multiple-output (MO) for uplink transmissions. A set of *K* selected user terminals 120 collectively represents the multiple-output for downlink transmissions and the multiple-input for uplink transmissions. For pure SDMA, it is desired to have *Nₐₚ* ≥ *K* ≥ 1 if the data symbol streams for the *K* user terminals are not multiplexed in code, frequency or time by some means, *K* may be greater than *Nₐₚ* if the data symbol streams can be multiplexed using TDMA technique, different code channels with CDMA, disjoint sets of subbands with OFDM, and so on. Each selected user terminal transmits user-specific data to and/or receives user-specific data from the access point. In general, each selected user terminal may be equipped with one or multiple antennas (i.e., *Nᵤₜ* ≥ 1). The *K* selected user terminals can have the same or different number of antennas.

The MIMO system 100 may be a time division duplex (TDD) system or a frequency division duplex (FDD) system. For a TDD system, the downlink and uplink share the same frequency band. For an FDD system, the downlink and uplink use different frequency bands. The MIMO system 100 may also utilize a single carrier or multiple carriers for transmission. Each user terminal may be equipped with a single antenna (e.g., in order to keep costs down) or multiple antennas (e.g., where the additional cost can be supported). The system 100 may also be a TDMA system if the user terminals 120 share the same frequency channel by dividing transmission/reception into different time slots, each time slot being assigned to different user terminal 120.

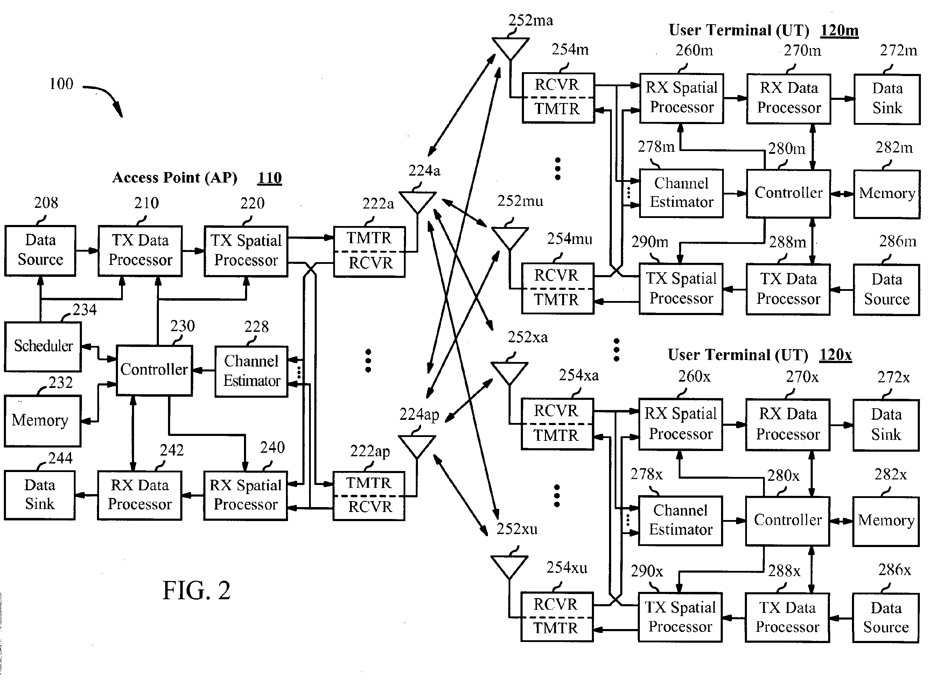

FIG. 2 illustrates a block diagram of access point 110 and two user terminals 120m and 120x in MIMO system 100. The access point 110 is equipped with *Nₜ* antennas 224a through 224t. User terminal 120m is equipped with *N*_{*ut*,*m*} antennas 252ma through 252mu, and user terminal 120x is equipped with *N_{ut,x}* antennas 252xa through 252xu. The access point 110 is a transmitting entity for the downlink and a receiving entity for the uplink. Each user terminal 120 is a transmitting entity for the uplink and a receiving entity for the downlink. As used herein, a "transmitting entity" is an independently operated apparatus or device capable of transmitting data via a wireless channel, and a "receiving entity" is an independently operated apparatus or device capable of receiving data via a wireless channel. In the following description, the subscript "*dn"* denotes the downlink, the subscript "*up*" denotes the uplink, *Nᵤₚ* user terminals are selected for simultaneous transmission on the uplink, *N_{dn}* user terminals are selected for simultaneous transmission on the downlink, *Nᵤₚ* may or may not be equal to *N_{dn},* and *Nᵤₚ* and *N_{dn}* may be static values or can change for each scheduling interval. The beam-steering or some other spatial processing technique may be used at the access point and user terminal.

On the uplink, at each user terminal 120 selected for uplink transmission, a TX data processor 288 receives traffic data from a data source 286 and control data from a controller 280. TX data processor 288 processes (e.g., encodes, interleaves, and modulates) the traffic data for the user terminal based on the coding and modulation schemes associated with the rate selected for the user terminal and provides a data symbol stream. A TX spatial processor 290 performs spatial processing on the data symbol stream and provides *N*_{*ut*,*m*} transmit symbol streams for the *N_{ut,m}* antennas. Each transmitter unit (TMTR) 254 receives and processes (e.g., converts to analog, amplifies, filters, and frequency upconverts) a respective transmit symbol stream to generate an uplink signal. *N_{ut,m}* transmitter units 254 provide *N_{ut,m}* uplink signals for transmission from *N_{ut,m}* antennas 252 to the access point.

*Nᵤₚ* user terminals may be scheduled for simultaneous transmission on the uplink. Each of these user terminals performs spatial processing on its data symbol stream and transmits its set of transmit symbol streams on the uplink to the access point.

At access point 110, *Nₐₚ* antennas 224a through 224ap receive the uplink signals from all *Nᵤₚ* user terminals transmitting on the uplink. Each antenna 224 provides a received signal to a respective receiver unit (RCVR) 222. Each receiver unit 222 performs processing complementary to that performed by transmitter unit 254 and provides a received symbol stream. An RX spatial processor 240 performs receiver spatial processing on the *Nₐₚ* received symbol streams from *Nₐₚ* receiver units 222 and provides *Nᵤₚ* recovered uplink data symbol streams. The receiver spatial processing is performed in accordance with the channel correlation matrix inversion (CCMI), minimum mean square error (MMSE), soft interference cancellation (SIC) or some other technique. Each recovered uplink data symbol stream is an estimate of a data symbol stream transmitted by a respective user terminal. An RX data processor 242 processes (e.g., demodulates, deinterleaves, and decodes) each recovered uplink data symbol stream in accordance with the rate used for that stream to obtain decoded data. The decoded data for each user terminal may be provided to a data sink 244 for storage and/or a controller 230 for further processing.

On the downlink, at access point 110, a TX data processor 210 receives traffic data from a data source 208 for *N_{dn}* user terminals scheduled for downlink transmission, control data from a controller 230 and possibly other data from a scheduler 234. The various types of data may be sent on different transport channels. TX data processor 210 processes (e.g., encodes, interleaves, and modulates) the traffic data for each user terminal based on the rate selected for that user terminal. TX data processor 210 provides *N_{dn}* downlink data symbol streams for the *N_{dn}* user terminals. A TX spatial processor 220 performs spatial processing (such as a precoding or beamforming, as described in the present disclosure) on the *N_{dn}* downlink data symbol streams, and provides *Nₐₚ* transmit symbol streams for the *Nₐₚ* antennas. Each transmitter unit 222 receives and processes a respective transmit symbol stream to generate a downlink signal. *Nₐₚ* transmitter units 222 providing *Nₐₚ* downlink signals for transmission from *Nₐₚ* antennas 224 to the user terminals.

At each user terminal 120, *N_{ut,m}* antennas 252 receive the *Nₐₚ* downlink signals from access point 110. Each receiver unit 254 processes a received signal from an associated antenna 252 and provides a received symbol stream. An RX spatial processor 260 performs receiver spatial processing on *N_{ut,m}* received symbol streams from *N_{ut,m}* receiver units 254 and provides a recovered downlink data symbol stream for the user terminal. The receiver spatial processing is performed in accordance with the CCMI, MMSE or some other technique. An RX data processor 270 processes (e.g., demodulates, deinterleaves and decodes) the recovered downlink data symbol stream to obtain decoded data for the user terminal.

At each user terminal 120, a channel estimator 278 estimates the downlink channel response and provides downlink channel estimates, which may include channel gain estimates, SNR estimates, noise variance and so on. Similarly, a channel estimator 228 estimates the uplink channel response and provides uplink channel estimates. Controller 280 for each user terminal typically derives the spatial filter matrix for the user terminal based on the downlink channel response matrix *H_{dn.m}* for that user terminal. Controller 230 derives the spatial filter matrix for the access point based on the effective uplink channel response matrix *H_{up.eff}*. Controller 280 for each user terminal may send feedback information (e.g., the downlink and/or uplink eigenvectors, eigenvalues, SNR estimates and so on) to the access point. Controllers 230 and 280 also control the operation of various processing units at access point 110 and user terminal 120, respectively.

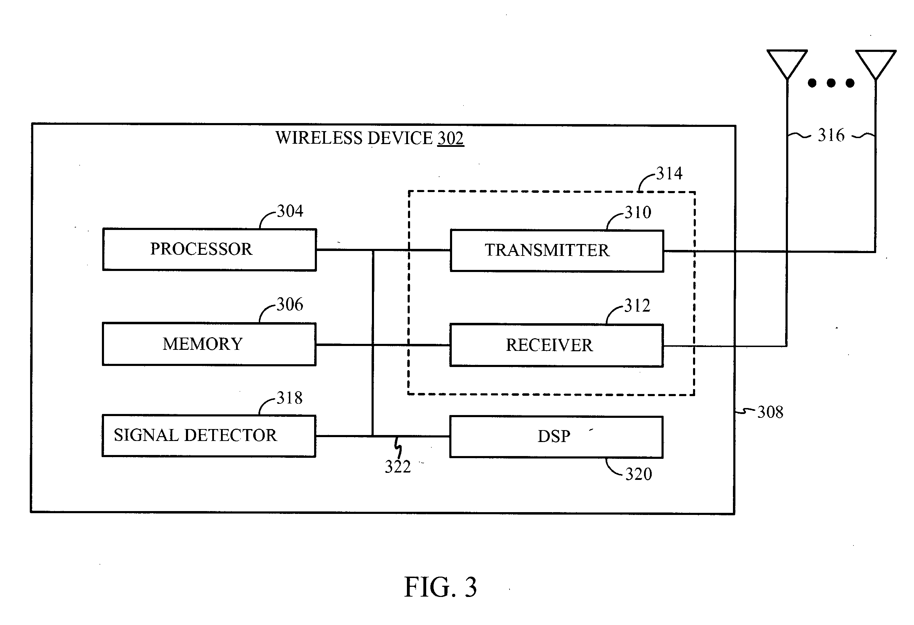

FIG. 3 illustrates various components that may be utilized in a wireless device 302 that may be employed within the wireless communication system, such as the MIMO system 100. The wireless device 302 is an example of a device that may be configured to implement the various methods described herein. The wireless device 302 may be an access point 110 or a user terminal 120.

The wireless device 302 may include a processor 304 which controls operation of the wireless device 302. The processor 304 may also be referred to as a central processing unit (CPU). Memory 306, which may include both read-only memory (ROM) and random access memory (RAM), provides instructions and data to the processor 304. A portion of the memory 306 may also include non-volatile random access memory (NVRAM). The processor 304 typically performs logical and arithmetic operations based on program instructions stored within the memory 306. The instructions in the memory 306 may be executable to implement the methods described herein.

The wireless device 302 may also include a housing 308 that may include a transmitter 310 and a receiver 312 to allow transmission and reception of data between the wireless device 302 and a remote location. The transmitter 310 and receiver 312 may be combined into a transceiver 314. A single or a plurality of transmit antennas 316 may be attached to the housing 308 and electrically coupled to the transceiver 314. The wireless device 302 may also include (not shown) multiple transmitters, multiple receivers, and multiple transceivers.

The wireless device 302 may also include a signal detector 318 that may be used in an effort to detect and quantify the level of signals received by the transceiver 314. The signal detector 318 may detect such signals as total energy, energy per subcarrier per symbol, power spectral density and other signals. The wireless device 302 may also include a digital signal processor (DSP) 320 for use in processing signals.

The various components of the wireless device 302 may be coupled together by a bus system 322, which may include a power bus, a control signal bus, and a status signal bus in addition to a data bus.

In next generation WLANs, such as the MIMO system 100 from FIG. 1, downlink (DL) multi-user (MU) MIMO transmission may represent a promising technique to increase overall network throughput.

### EXAMPLE MPDU GROUPING

Various amendments to the IEEE 802.11 standard, such as 802.11 ac, enable higher throughput in 802.11 networks. The higher throughput is realized through several measures, such as the use of an 80 MHz or 160 MHz channel bandwidth. 802.11ac is also referred to as Very High Throughput (VHT).

One of the limiting factors for increasing the throughput is filling up Aggregated Media Access Control (MAC) Protocol Data Units (A-MPDUs)-also referred to as packets-with as much data as possible, to enable transmissions of a decent duration. The high physical layer (PHY) rates generate a significant amount of data that may most likely be aggregated in an effort to create an A-MPDU of sufficient length to enable efficient over-the-air (OTA) transmission relative to the overhead related to backoff and PHY headers. Assuming a 200 µs overhead per frame for backoff and PHY headers and an 80% target efficiency, the duration of the payload may most likely be at least 800 µs (1 ms total cycle time). Assuming a 5 GHz PHY rate, the A-MPDU size would be about 500 kB. With an 8 kB maximum MPDU size, this means that about 63 MPDU should be aggregated per A-MPDU.

The current retransmission bitmap that is part of the Block Ack (BA) frame allows for acknowledging 64 individual MPDUs. Practically, the maximum number of MPDUs per packet should not exceed about 20% of the retransmission bitmap, so a practical number for the retransmission bitmap would be 313 bits, which is almost 5 times larger than the current retransmission bitmap.

Certain aspects of the present disclosure allow single bits in a BA bitmap to acknowledge receipt of multiple MPDUs. As a result, a greater number of MPDUs may be acknowledged than if each bit acknowledged only a single MPDU. By reducing the overhead associated with a re-transmission bitmap, a greater number of MPDUs may be aggregated, thereby increasing overall throughput.

According to certain aspects, MPDU grouping may be dynamically adjusted based on channel conditions. In this manner, a block size (e.g., the number of MPDUs acknowledged with each bit) may be adjusted based on channel conditions. In addition or as an alternative, whether groups of MPDUs or individual MPDUs are acknowledged with each bit may also be dynamically adjusted.

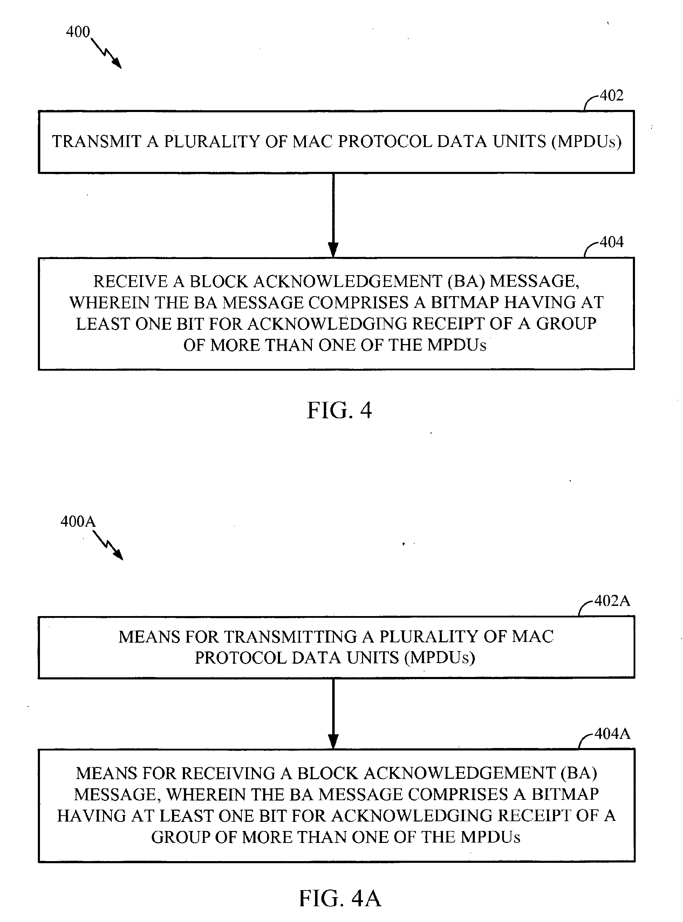

FIG. 4 illustrates example operations 400 for transmitting A-MPDUs and receiving BAs, in accordance with certain aspects of the present disclosure. The operations 400 may be performed, for example, by any transmitting device, such as an AP or a station (STA).

The operations 400 begin, at 402, by transmitting a plurality of MPDUs. At 404, a BA message is received, wherein the BA message comprises a bitmap having a bit for acknowledging receipt of a group of more than one MPDU. The bit may acknowledge that each MPDU of the group was successfully received. For certain aspects, the BA message may comprise one or more bits, wherein each of the bits acknowledges receipt of a group of one or more MPDUs. For certain aspects, the BA message may comprise a group size field that indicates a number of MPDUs acknowledged by the bit.

According to certain aspects, each MPDU may be transmitted with an indication of whether or not that MPDU belongs to a group, and the bitmap may comprise at least one bit to individually acknowledge a MPDU that does not belong to a group. For certain aspects, the indication of whether or not each MPDU belongs to a group may be provided in a MPDU delimiter field, which may indicate the presence of a delimiter extension. The delimiter extension may comprise a VHT sequence number, and MPDUs of the same group may have the same VHT sequence number. For other aspects, the indication of whether or not each MPDU belongs to a group may be provided in a Fragment field of a MAC header. This Fragment field may comprise a bit indicating whether a MPDU is a last MPDU in a group. According to certain aspects, MPDUs in the same group may have the same sequence number, but may have.different subframe sequence numbers. According to other aspects, MPDUs in the same group may have increasing sequence numbers.

For certain aspects, the operations 400 may also include determining a group size n, wherein the bit in the bitmap at 404 acknowledges receipt of *n* MPDUs in the same group. The group size *n* may be determined via communication (e.g., negotiation) with an apparatus (e.g., a STA) to which the MPDUs are transmitted. The operations 400 may also include sending a grouping message to the apparatus containing the group size *n* as part of the negotiation and suspending sending grouped MPDUs until receiving confirmation the grouping message was successfully received by the apparatus. The bitmap may comprise at least one bit acknowledging receipt of a last group comprising less than *n* MPDUs. The operations 400 may also include transmitting, for at least one group of n MPDUs, *n* - *m* MPDUs containing data and *m* Null MPDUs.

According to certain aspects, the BA message may comprise another bit indicating one or more bits in the bitmap are used to acknowledge groups of *n* MPDUs. In this case, the operations 400 may also include transmitting a BA request (BAR) message comprising a bit indicating request of the BA message having bits in the bitmap used to acknowledge groups of *n* MPDUs. The BAR message may comprise a group size field indicating a value of *n*.

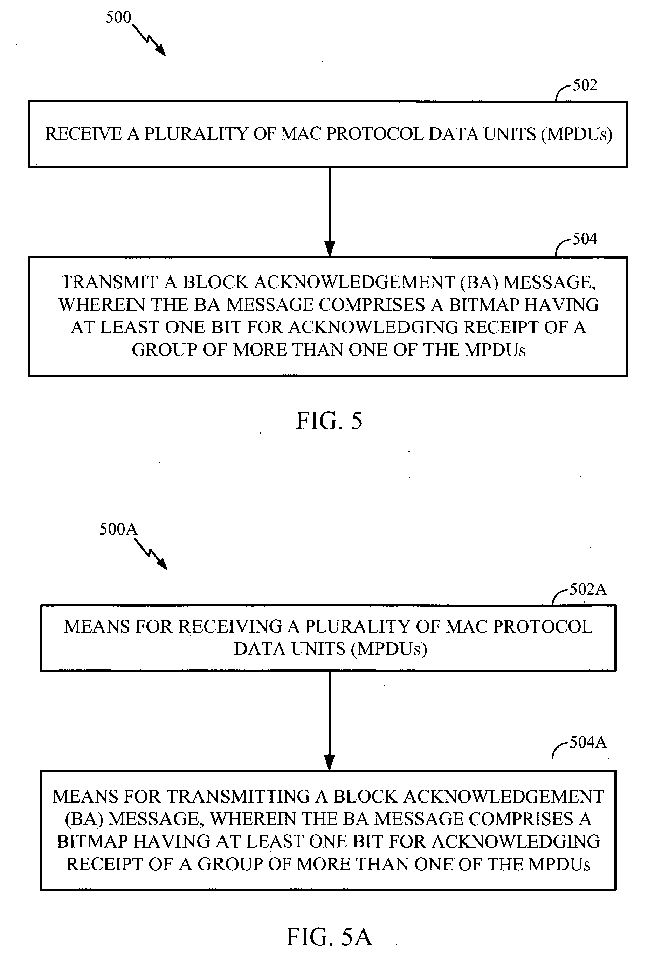

FIG. 5 illustrates example operations 500 for receiving and acknowledging A-MPDUs, in accordance with certain aspects of the present disclosure. The operations 500 may be performed, for example, by any receiving device, such as an AP or a station.

The operations 500 begin, at 502, by receiving a plurality of MPDUs. At 504, a BA message is transmitted, wherein the BA message comprises a bitmap having a bit for acknowledging receipt of a group of more than one MPDU. For certain aspects, the BA message may comprise a number of bits, each bit for acknowledging receipt of a group of MPDUs.

For certain aspects, each MPDU may be received with an indication of whether or not that MPDU belongs to a group, and the bitmap may comprise at least one bit to individually acknowledge a MPDU that does not belong to a group. For certain aspects, this indication may be provided in a MPDU delimiter field, which may indicate the presence of a delimiter extension. The delimiter extension may comprise a VHT sequence number, and MPDUs of the same group may have the same VHT sequence number. For other aspects, this indication may be provided in a Fragment field of a MAC header. In this case, the Fragment field may comprise a bit indicating whether a MPDU is a last MPDU in a group. For certain aspects, each MPDU may be received with an indication of whether or not that MPDU is the last MPDU in a group.

For certain aspects, the bit at 504 may acknowledge a group of MPDU grouped based on masking one or more least significant bits (LSBs) in corresponding sequence numbers.

According to certain aspects, the operations 500 may include determining a group size *n*, wherein the bit in the bitmap acknowledges receipt of *n* MPDUs in the same group. The group size *n* may be determined via negotiation with an apparatus, such as an AP. This negotiation may involve the exchange of add Block Acknowledgment (ADDBA) request and response messages. The operations 500 may also include receiving, from the apparatus, a grouping message indicating the group size *n* as part of the negotiation and sending the apparatus a confirmation message confirming receipt of the grouping message, wherein the apparatus suspends sending grouped MPDUs until receiving the confirmation message (i.e., the confirmation message triggers the apparatus to resume sending grouped MPDUs). For certain aspects, MPDUs in the same group may have the same sequence number, but may have different subframe sequence numbers. For other aspects, MPDUs in the same group may have increasing sequence numbers. For certain aspects, the bitmap may comprise at least one bit acknowledging receipt of a last group comprising less than *n* MPDUs. In this case, the operations 500 may also include determining that the last group comprises less than *n* MPDUs based on at least one of detection of an end of frame (EOF) delimiter or detection of the end of data.

For certain aspects, the BA message may comprise another bit indicating one or more bits in the bitmap are used to acknowledge groups of *n* MPDUs. In such instances, the operations 500 may further include receiving a BA request (BAR) message comprising yet another bit indicating request of the BA message having the bits in the bitmap used to acknowledge the groups of *n* MPDUs. The BAR message may comprise a group size field indicating a value of *n*. The group size field may comprise at least one bit of a control field of the BAR message.

For certain aspects, the BA message may comprise a group size field that indicates a number of MPDUs acknowledged by the bit. The group size field may comprise at least one bit of a control field of the BA message.

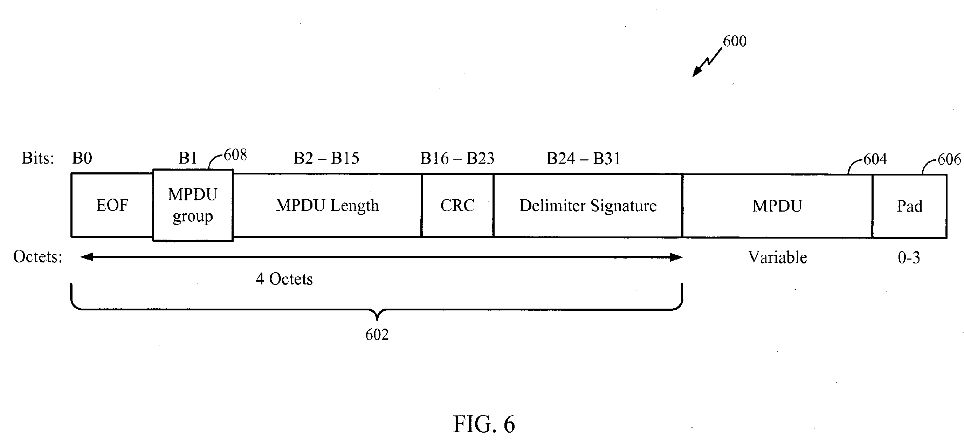

According to certain aspects, MPDUs may be grouped and transmitted with an indication that the MPDU belongs to a group. For example, FIG. 6 illustrates an example format of an A-MPDU subframe 600. The A-MPDU subframe 600 may comprise a 4-octet MPDU delimiter 602, a MPDU 604 of variable length, and up to three padding bits 606. An "MPDU group" bit 608 in the MPDU delimiter 602 may provide an indication that the MPDU 604 belongs to a group.

According to certain aspects, the MPDU group bit may be implemented using a (previously) reserved bit in the delimiter to indicate whether the MPDU belongs to a group or not. For example, if this bit is 0, the MPDU is a single MPDU not belonging to a group and will be acknowledged individually. If the bit is 1, the MPDU belongs to a group, and the receiver may most likely receive n MPDUs. According to certain aspects, the *n* MPDUs in the group may have the same sequence number. In this manner, the BA mechanism may remain unchanged, while allowing an increased number of MPDUs to be acknowledged.

As noted, in a conventional BA bitmap, a bit in the bitmap of the BA corresponds to one MPDU. According to aspects presented herein, the transmitter and the receiver may negotiate a block length *n* to correspond to one bit in the BA bitmap. The receiver may mark bit k corresponding to block *k* of MPDUs only if all MPDUs with sequence number from (*k*-1)**n* to *k***n*-1, have been received. If any one of the MPDUs in the block (*k*-1)*n to *k***n*-1 are missing, the bit corresponding to block k may not be marked.

According to certain aspects, the starting sequence number in the Block Ack frame may be set to the sequence number of the first MPDU of the first block of MPDUs that is acknowledged in the Block Ack bitmap. The starting sequence number may also be set to the block index of the first block that is acknowledged in the Block Ack bitmap. Which convention gets selected is a matter of choice. The block index may be equal to the MPDU sequence number divided by n (MPDU sequence number / *n*), truncated to 0 digits.

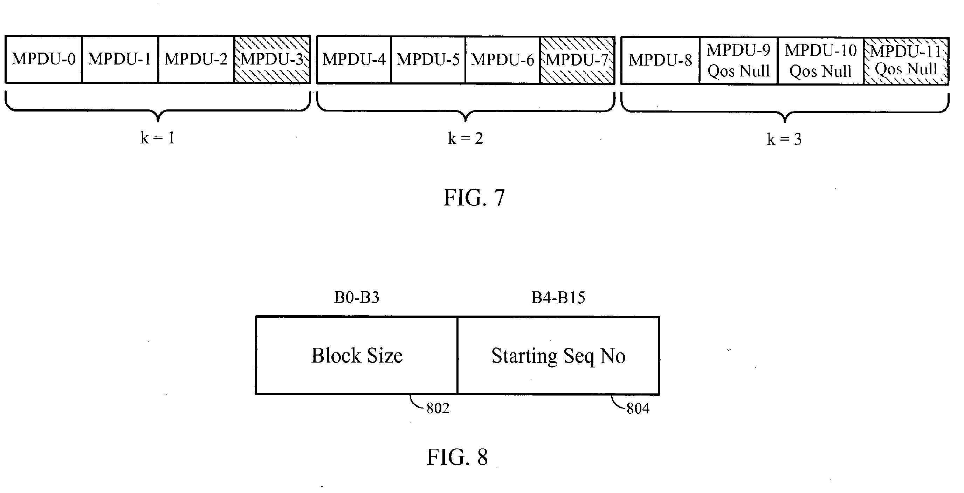

In the example illustrated in FIG. 7, the block size chosen is of value *n* = 4. Hence a BA bitmap is marked corresponding to block *k* =1 if MPDU-0 to MPDU-3 have been received, to *k* = 2 if MPDU-4 to MPDU-7 are received, and so on. As illustrated, according to certain aspects, a transmitter may send as many MPDUs as possible in groups of *n*, except for remaining or "leftover" MPDUs, which may be less than n. These may be transmitted "ungrouped," or Null MPDUs may be added to reach *n* as shown in FIG. 7 for *k* = 3.

Note that this technique may be easily extended to the case where a bit in the BA bitmap acknowledges a block spanning (*k*-1)**n* to *k***n*-1 + *T,* where *T* is a fixed constant. (MPDU sequence number) mod *n* = 0 denotes the sequence number of the first MPDU in a block for *T* = 0. When T is nonzero, (MPDU sequence number) mod *n* = T denotes the sequence number of the first MPDU in a block.

According to certain aspects, it may be easier (though not essential) from an implementation perspective if the transmitter ensures that all A-MPDUs contain an integer number of blocks of MPDUs. However, if there is insufficient data in the buffers to complete a block, the transmitter may append up to *n*-1 MPDUs of type QoS-Null with which to complete the block. In other words, the transmitter may transmit *n* - *m* MPDUs containing data followed by *m* Null MPDUs, where *m* ranges from 0 to *n*-1. In the example illustrated in FIG. 7, no data MPDUs are available after MPDU-8. The transmitter therefore appends three (in this case, *n*-1 where *n* = 4) MPDUs of type QoS-Null to complete the block.

An alternative for filling up blocks with Null frames is to define an End of Block (EOB) subfield inside the MPDU delimiter 602. When the EOB subfield is 1, the MPDU that follows the delimiter is the last MPDU in the block. The transmitter will then skip the remaining MPDU sequence numbers and resume at the first sequence number of the next block.

The capability of the single bit acknowledgement for blocks (i.e., groups) of MPDUs may be signaled in the capability exchange messaging. The negotiation of the number of MPDUs per block and a starting MPDU sequence number may be carried via extra messaging in the ADDBA (Add Block Acknowledgement) protocol. According to certain aspects, a transmitter may suspend grouping MPDUs until receiving confirmation a receiver has received a "grouping message" indicating a block size *n*. FIG. 8 illustrates example fields 802, 804 that may be included in a BA parameter that may be used to indicate a block size and a starting sequence number for beginning MPDU grouping.

According to certain aspects, a transmitter and receiver may negotiate the group size *n* of MPDUs *a priori.* In this case, the receiver may acknowledge groups of *n* in-sequence MPDUs. According to certain aspects, the last group may be acknowledged even if it has less than *n* MPDUs.

The Acknowledgement procedure according to certain aspects may ensue as described below. A receiver may include in the BA the sequence number of the first MPDU received correctly. Each bit in the BA bitmap may acknowledge a multiple of *n* correctly received in-sequence MPDUs, starting from the initial sequence number in the BA.

As noted above, the last group may have less than *n* MPDUs. The receiver may acknowledge the last group even if the number of MPDUs is less than *n*. The receiver is able to make the determination that the last group actually contained less than *n* MPDUs. According to certain aspects, the end of the A-MPDU may be detected by the presence of the End of Frame (EOF) delimiter or the end of the data. If EOF is not detected (a cyclic redundancy check (CRC) error), this may be considered as a frame error, and the receiver may not acknowledge the last group since the receiver does not know if there were additional MPDUs. A transmitter may receive the BA transmitted from the receiver and may make the correct determination based on the first sequence number, on the bitmap, and on the knowledge of the last sequence number sent.

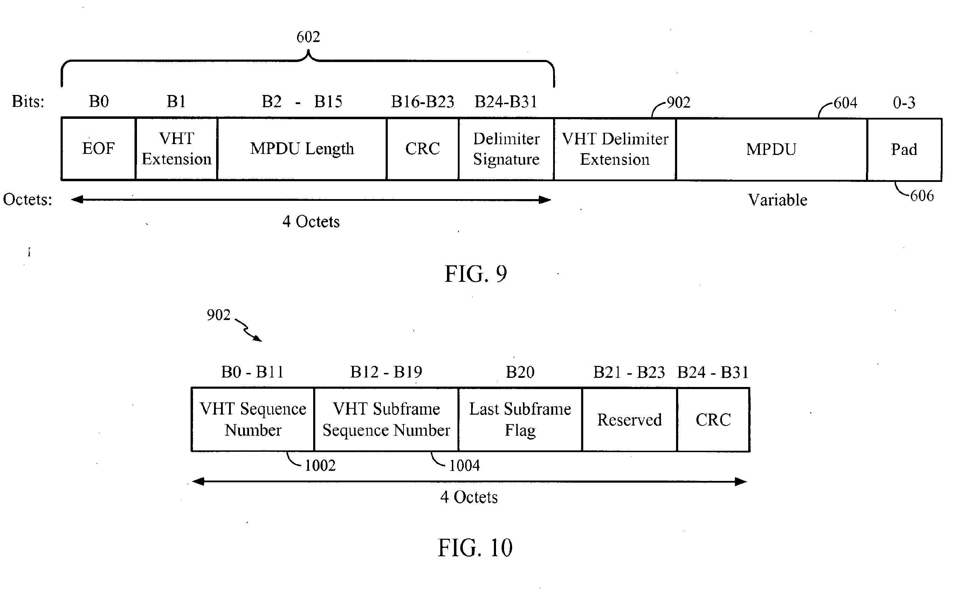

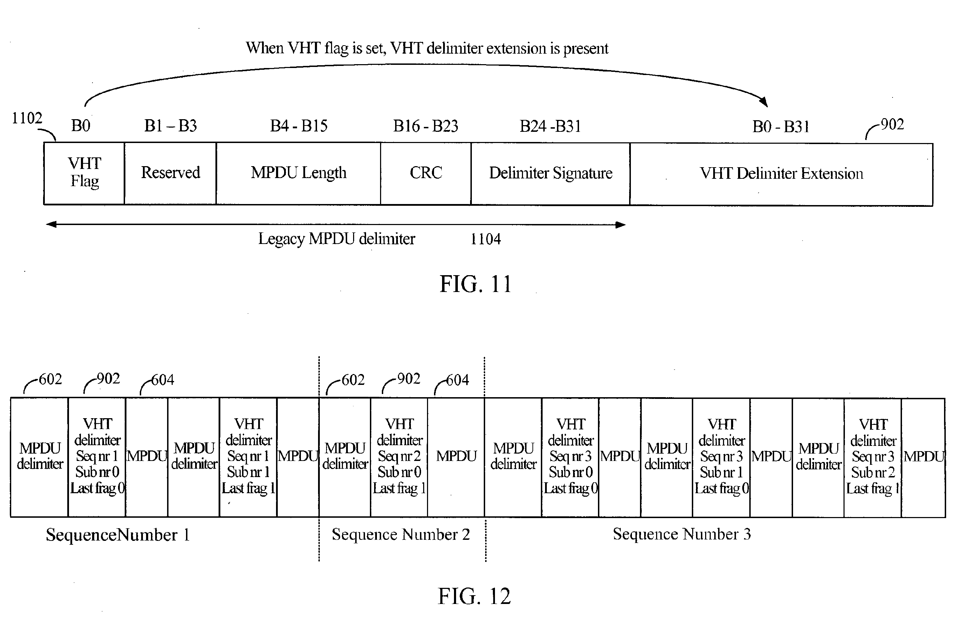

As illustrated in FIGs. 9 and 10, according to certain aspects, a VHT delimiter extension field 902 may be introduced between the MPDU delimiter 602 and the MPDU 604 in an A-MPDU subframe. Spanning 4 octets, the VHT delimiter extension field 902 may comprise a 12-bit VHT sequence number field 1002 and an 8-bit VHT subframe sequence number field 1004. According to certain aspects, multiple MPDU frames may be grouped together (as subframes) using a single VHT sequence number, but having different VHT subframe sequence numbers. As illustrated in FIG. 11, the presence of the VHT delimiter extension field 902 may be indicated by a "VHT flag" field 1102, for example in a legacy MPDU delimiter 1104.

According to certain aspects, a VHT sequence number may supersede a MPDU sequence number. In other words, each group (or block) may be identified by the VHT sequence number. A block may be considered successfully received only if all the A-MPDU subframes (i.e., the MPDUs) are correctly received. According to certain aspects, a VHT subframe sequence number and an indication of the last subframe may provide the receiver with enough information to make the determination. For Automatic Repeat Request (ARQ) purposes, the VHT sequence number may be used instead of the MPDU sequence number. This technique may be implemented with no changes to the existing BA frame structure. Thus, the MPDU sequence number may not be used and can be kept as in current implementations.

Blocks may be generated on the fly, and the number of MPDUs per block may be dynamically adapted. According to certain aspects, when a channel is really good (i.e., exhibits a very high channel quality), a transmitter may create large groups with many subframes. As a channel deteriorates, the grouping can be reduced further and further, down to eventually single MPDU frames. It is even possible to change the VHT sequence number assignment/grouping on the fly as long as the transmitter keeps track of what has been sent out and acknowledged. This approach allows for an extremely adaptive mechanism. FIG. 12 illustrates an example transmission, where a number of smaller subframes have been grouped together sharing the same VHT sequence number (e.g., VHT sequence number = 3 in this case).

According to certain aspects, a Fragment Number field may be used to group ("aggregate") multiple MPDUs under a single sequence number, thereby reducing the implicated number of bits inside the retransmission bitmap.

A transmitter may transmit multiple MPDUs with the same sequence number by increasing the fragment number on each subsequent MPDU that is transmitted under the same sequence number. A More Fragments field may be set to 1 except on the last MPDU that is transmitted under a sequence number, for which it is set to 0.

A receiver may acknowledge receipt of a sequence number when a MPDU is received with the More Fragments field set to 0 and all prior fragment numbers have been received for that sequence number (i.e., MPDUs with the same sequence number and the More Fragments field set to 1).

A transmitter may retransmit all MPDUs for a given sequence number when the BA bitmap indicates that this particular sequence number was not received.

The use of the Fragment Number field for aggregation may be a negotiable capability. The use of the Fragment Number field for aggregation may be selectively allowed, for example, only on certain channel bandwidths, such as 80 MHz or 160 MHz.

When aggregation based on the Fragment Number field is used, the use of fragmentation may be prohibited, because both mechanisms use the same frame header fields (see illustrations below). According to certain aspects, a maximum number of aggregated MPDUs per sequence number may be negotiated in advance.

According to certain aspects, there may be a convention that any sequence number shall contain a fixed number of MPDUs, in which case the More Fragments field need not be used to indicate the last MPDU in the sequence number (e.g., the More Fragments field may be set to 0 for all MPDUs for certain aspects, or to 1 for other aspects). The transmission of a single MPDU in this case may entail that a certain number of Null MPDUs are transmitted under the same sequence number, in order to receive a positive acknowledgement of that sequence number. The transmission of a single MPDU may also be indicated by setting the More Fragments field to 0, while the transmission of an aggregated MPDU may be indicated by setting the More Fragments field to 1 (i.e., also on the last MPDU that gets aggregated for the sequence number).

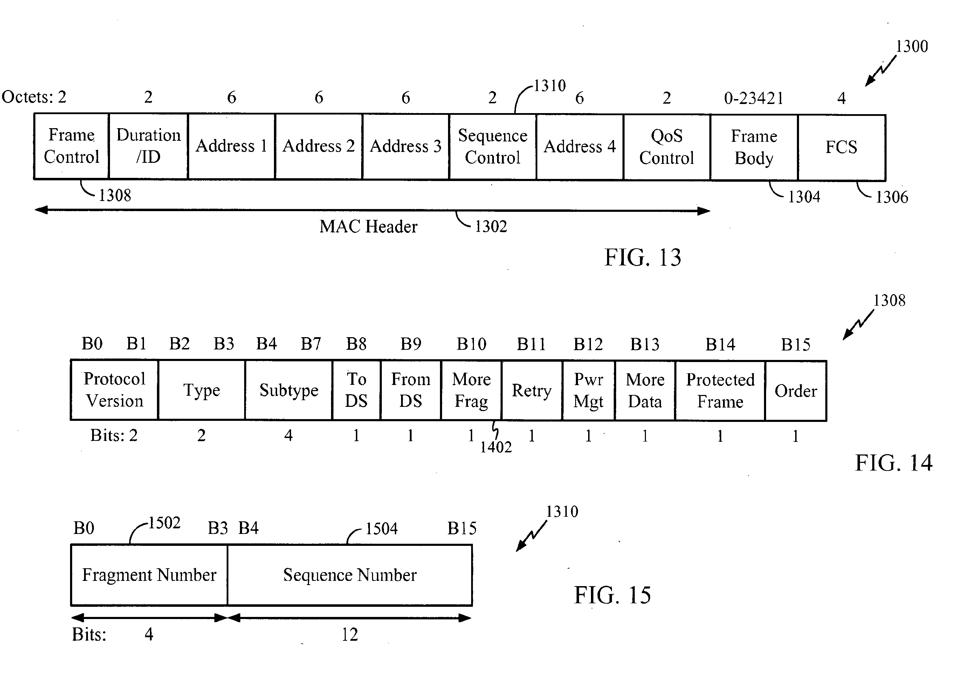

FIG. 13 illustrates an example 802.11 MAC frame format 1300. The MAC frame format 1300 may comprise a MAC header 1302, a frame body 1304, and a frame check sequence (FCS) field 1306. The MAC header may comprise a 2-octet Frame Control field 1308 and a 2-octet Sequence Control field 1310.

FIG. 14 illustrates an example Frame Control field 1308 with a "More Fragments" field 1402, in accordance with certain aspects of the present disclosure. The More Fragments field 1402 may comprise a single bit as described above.

FIG. 15 illustrates an example Sequence Control field 1310. Spanning 16 bits, the Sequence Control field 1310 may comprise a 4-bit Fragment Number field 1502 and a 12-bit Sequence Number field 1504.

An example operation from a transmitter perspective may proceed as described below. A transmitter may transmit a first MPDU with sequence number 0 and the More Fragments bit set (e.g., to "1"). The transmitter may transmit a second MPDU with sequence number 1 and the More Fragments bit cleared (e.g., set to "0") to indicate the last fragment. The transmitter may then receive a BA from the receiver. If the BA indicates sequence number 0 was successfully received, the transmitter may transmit a third MPDU (e.g., with sequence number 1 and More Fragments set to "1") and a fourth MPDU (e.g., with sequence number 1 and More Fragments set to "0") and repeat these operations. On the other hand, if the BA indicates sequence number 0 was not successfully received, the transmitter may re-transmit the first and second MPDUs.

An example operation from a receiver perspective may progress as described below. A receiver may receive a first MPDU with sequence number 0 and the More Fragments bit set (e.g., to "1"). The receiver may receive a second MPDU with sequence number 1 and the More Fragments bit cleared (e.g., set to "0") to indicate the last fragment. The receiver may then transmit a BA with a bitmap having a single bit indicating successful receipt of both MPDUs with sequence number 0. The receiver may then receive additional MPDUs in a similar manner. On the other hand, if the receiver receives only the first MPDU and not the second, the receiver may transmit a BA indicating sequence number 0 was not successfully received.

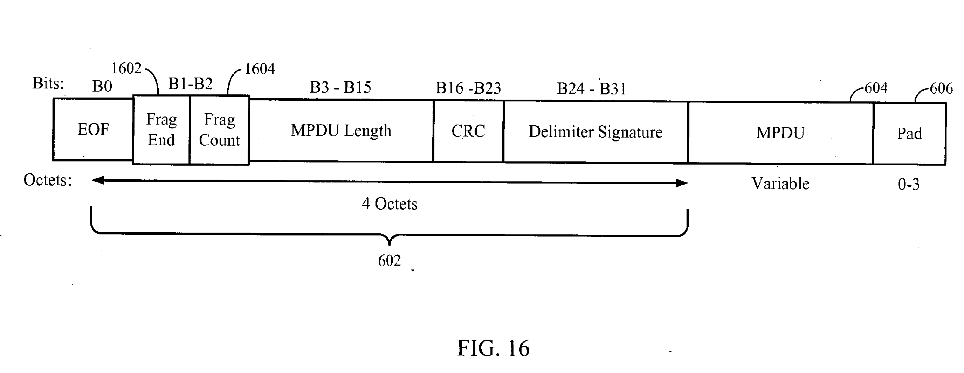

In a conventional A-MPDU scheme, each MPDU is assigned a unique sequence number. In a technique presented herein, more than one MPDU is assigned the same sequence number. MPDUs having the same sequence number may be distinguished through two fields in a MPDU delimiter 602 for an A-MPDU subframe, as illustrated in FIG. 16. For example, a bit in a Fragment End field 1602 may be set for all MPDUs except the last one of the MPDUs having the same sequence number. A Fragment Count field 1604 may be incremented for each successive MPDU having the same sequence number.

All MPDUs of a given sequence number may be acknowledged via a single bit in the BA. The A-MPDU parser may send MPDUs of a given sequence number to the re-assembly queue only when all the MPDUs of the sequence number are received correctly. If any one of the MPDUs of a given sequence number N are not received, the A-MPDU parser may discard the correctly received MPDUs of sequence number *N* and may wait for the transmitter to retransmit the MPDUs. Note that the A-MPDU parser may first check the Sequence Control field in the MPDU to determine if all the MPDUs belong to the same block.

As noted above, according to certain aspects of grouping, each MPDU may have its own sequence number. If the link rate drops, the AP may send an aggregate of MPDUs that may have a size less than the negotiated block size and still obtain a single bit Block Ack.

As an alternative, or in addition, an AP may dynamically switch between the grouped mode and the ungrouped mode. According to certain aspects, an indicator (e.g., 1 bit) in a MPDU delimiter may signal whether grouping is enabled or not. If the bit is turned on (i.e., set), then the STA may send a BA with a single bit representing multiple acknowledged MPDUs (or a BA bitmap with one or more bits, wherein each bit represents multiple acknowledged MPDUs). If the bit is off (i.e., cleared), then the STA may send a separate BA for each individual MPDU (or a BA bitmap with a separate bit corresponding to each individual MPDU). In this example, an A-MPDU may have such an indicator bit either on or off for all MPDUs.

According to certain aspects, a MPDU delimiter may contain an "End of Group (EOG)" subfield (e.g., 1 bit in size) that indicates whether a MPDU is the last MPDU in a group. This bit may be set to 1, for example, if a number of MPDUs must be sent that is smaller than the group size. As an example, if the group size is 4 but only one MPDU is to be sent at a particular point in time, the device may send the MPDU with sequence number 0 and with the EOG bit set to 1. The next MPDU may have a sequence number 4.

As an alternative, there may be no EOG bit, in which case the remaining MPDUs may be sent as Null MPDUs (to reach the block size). In the example of FIG> 7 above, the device prepares an A-MPDU with the MPDU (e.g., MPDU-8) having sequence number 0 and with three Null MPDUs (e.g., MPDU-9, MPDU-10, and MPDU-11) with sequence numbers 1, 2, and 3.

According to certain aspects, MPDUs may be grouped by masking some number of lower order bits (e.g., LSBs) of their corresponding sequence numbers (e.g., masking the lower 2 bits would correspond to a block size of 4). The bits in the Block Ack bitmap may, thus, correspond to the "base" sequence numbers, which are the sequence numbers with the lower order bits masked, or the sequence numbers that are shifted by some number of positions toward the lower order bits. As an example, if 1 LSB gets masked:
Groups: (0 1), (2 3), (4 5), etc.

The base sequence numbers are 0, 2, 4, etc. (if the 1 LSB is masked) or 0, 1, 2, etc. (if the sequence numbers are shifted to the right 1 LSB).

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering. For example, operations 400 and 500 illustrated in FIGs. 4 and 5 correspond to means 400A and 500A illustrated in FIGs. 4A and 5A, respectively.

For example, means for transmitting may comprise a transmitter (e.g., the transmitter unit 222) and/or an antenna 224 of the access point 110 or the transmitter unit 254 and/or an antenna 252 of the user terminal 120 illustrated in FIG. 2. Means for receiving may comprise a receiver (e.g., the receiver unit 254) and/or an antenna 252 of the user terminal 120 or the receiver unit 222 and/or an antenna 224 of the access point 110 illustrated in FIG. 2. Means for processing or means for determining may comprise a processing system, which may include one or more processors, such as the RX data processor 270, the TX data processor 288, and/or the controller 280 of the user terminal 120 illustrated in FIG. 2.

As used herein, the term "determining" encompasses a wide variety of actions. For example, "determining" may include calculating, computing, processing, deriving, investigating, looking up (e.g., looking up in a table, a database or another data structure), ascertaining, and the like. Also, "determining" may include receiving (e.g., receiving information), accessing (e.g., accessing data in a memory), and the like. Also, "determining" may include resolving, selecting, choosing, establishing, and the like.

As used herein, a phrase referring to "at least one of" a list of items refers to any combination of those items, including single members. As an example, "at least one of *a, b,* or c" is intended to cover: *a, b,* c, *a-b, a-c, b-c,* and *a-b-c.*

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware or any combination thereof. If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user terminal 120 (see FIG. 1), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further.

The processor may be responsible for managing the bus and general processing, including the execution of software stored on the machine-readable media. The processor may be implemented with one or more general-purpose and/or special-purpose processors. Examples include microprocessors, microcontrollers, DSP processors, and other circuitry that can execute software. Software shall be construed broadly to mean instructions, data, or any combination thereof, whether referred to as software, firmware, middleware, microcode, hardware description language, or otherwise. Machine-readable media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product. The computer-program product may comprise packaging materials.

In a hardware implementation, the machine-readable media may be part of the processing system separate from the processor. However, as those skilled in the art will readily appreciate, the machine-readable media, or any portion thereof, may be external to the processing system. By way of example, the machine-readable media may include a transmission line, a carrier wave modulated by data, and/or a computer product separate from the wireless node, all which may be accessed by the processor through the bus interface. Alternatively, or in addition, the machine-readable media, or any portion thereof, may be integrated into the processor, such as the case may be with cache and/or general register files.

The processing system may be configured as a general-purpose processing system with one or more microprocessors providing the processor functionality and external memory providing at least a portion of the machine-readable media, all linked together with other supporting circuitry through an external bus architecture. Alternatively, the processing system may be implemented with an ASIC (Application Specific Integrated Circuit) with the processor, the bus interface, the user interface in the case of an access terminal), supporting circuitry, and at least a portion of the machine-readable media integrated into a single chip, or with one or more FPGAs (Field Programmable Gate Arrays), PLDs (Programmable Logic Devices), controllers, state machines, gated logic, discrete hardware components, or any other suitable circuitry, or any combination of circuits that can perform the various functionality described throughout this disclosure. Those skilled in the art will recognize how best to implement the described functionality for the processing system depending on the particular application and the overall design constraints imposed on the overall system.

The machine-readable media may comprise a number of software modules. The software modules include instructions that, when executed by the processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

If implemented in software, the functions may be stored or transmitted over as one or more instructions or code on a computer-readable medium. Computer-readable media include both computer storage media and communication media including any medium that facilitates transfer of a computer program from one place to another. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer- readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein. For certain aspects, the computer program product may include packaging material.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

## Claims

1. A method (500) for wireless communications, comprising:
receiving (502) a plurality of media access control, MAC, protocol data units,MPDUs, (600) from a node (110); and
transmitting (504) a block acknowledgement, BA, message, wherein the BA message comprises a bitmap comprising a bit for acknowledging receipt of a group of more than one of the MPDUs; **characterised in that** :
a group size n is negotiated with the node transmitting the MPDUs, and wherein the bit in the bitmap acknowledges receipt of n MPDUs in the same group.

2. The method (500) of claim 1, wherein each MPDU (600) is received with an indication of whether or not that MPDU is a last MPDU in a group.

3. The method (500) of claim 1, further comprising:
receiving, from an apparatus, a grouping message indicating the group size *n*; and
sending, to the apparatus, a confirmation message confirming receipt of the grouping message.

4. The method (500) of claim 1, wherein the bitmap comprises at least one bit acknowledging receipt of a last group comprising less than *n* MPDUs,
wherein the method further comprises:
determining the last group comprises less than n MPDUs based on at least one of detection of an end of frame, EOF, delimiter or detection of an end of data.

5. An apparatus (500A) for wireless communications, comprising:
means (502A) for receiving a plurality of media access control, MAC protocol data units, MPDUs, (600) from a node (110); and
means (504A) for transmitting a block acknowledgement, BA, message,
wherein the BA message comprises a bitmap comprising a bit for acknowledging receipt of a group of more than one of the MPDUs; **characterised in that** :
a group size *n* is negotiated with the node transmitting the MPDUs, and wherein the bit in the bitmap acknowledges receipt of *n* MPDUs in the same group.

6. A method (400) for wireless communications, comprising:
transmitting (402) a plurality of media access control (MAC) protocol data units, MPDUs,(600) to a node (120); and
receiving (404) a block acknowledgement, BA, message, wherein the BA message comprises a bitmap comprising a bit for acknowledging receipt of a group of more than one of the MPDUs; **characterised in that** :
a group size n is negotiated with the node receiving the MPDUs, and wherein the bit in the bitmap acknowledges receipt of n MPDUs in the same group.

7. The method (400, 500) of claim 1 or 6, wherein the bit acknowledges that each MPDU of the group was successfully received.

8. The method (400, 500) of claim 1 or 6,
wherein each MPDU (600) is received or transmitted with an indication (608) of whether or not that MPDU belongs to a group and wherein the bitmap comprises at least one bit to individually acknowledge a MPDU that does not belong to a group, wherein preferably the indication of whether or not each MPDU belongs to a group is provided in a MPDU delimiter field (602), indicating the presence of a delimiter extension comprising a very high throughput, VHT, sequence number, wherein MPDUs of the same group have the same VHT sequence number, or
wherein the indication of whether or not each MPDU belongs to a group is provided in a Fragment field of a MAC header and wherein the Fragment field comprises a bit (1602) indicating whether a MPDU is a last MPDU in a group.

9. The method (400, 500) of claim 1 or 6, wherein MPDUs in the same group have increasing sequence numbers or wherein MPDUs in the same group have the same sequence number and different subframe sequence numbers.

10. The method (400, 500) of claim 1 or 6 , wherein the bitmap comprises at least one bit acknowledging receipt of a last group comprising less than n MPDUs.

11. The method (400) of claim 6, further comprising transmitting, for at least one group of n MPDUs, *n* - m MPDUs containing data and m Null MPDUs.

12. The method (400, 500) of claim 1 or 6, wherein the BA message comprises another bit indicating one or more bits in the bitmap are used to acknowledge groups of n MPDUs.

13. The method (400, 500) of claim 1 or 6, wherein the BA message comprises a group size field that indicates a number of MPDUs acknowledged by the bit.

14. An apparatus (400A) for wireless communications, comprising:
means (402A) for transmitting a plurality of media access control, MAC,
protocol data units, MPDUs,(600) to a node (120); and
means (404A) for receiving a block acknowledgement, BA, message, wherein the BA message comprises a bitmap comprising a bit for acknowledging receipt of a group of more than one of the MPDUs; **characterised in that** :
a group size *n* is negotiated with the node receiving the MPDUs,
and wherein the bit in the bitmap acknowledges receipt of n MPDUs in the same group.

15. A computer-program product for wireless communications, comprising a computer-readable medium comprising instructions executable to carry out the steps of any of claims 1 to 4 or 6 to 13.

## Patentansprüche

1. Ein Verfahren (500) für Drahtloskommunikationen, das Folgendes aufweist:
Empfangen (502) einer Vielzahl von Medienzugriffssteuerungs- bzw. MAC-Protokolldateneinheiten bzw. MPDUs (MAC = media access control, MPDU = MAC protocol data unit) (600) von einem Node bzw. Knoten (110); und
Senden bzw. Übertragen (504) einer Blockempfangsbestätigungs- bzw. BA-Nachricht (BA = block acknowledgement), wobei die BA-Nachricht eine Bitmap aufweist, die ein Bit zum Bestätigen eines Empfangs einer Gruppe von mehr als einer der MPDUs aufweist;
**dadurch gekennzeichnet, dass**:
eine Gruppengröße n mit dem Node ausgehandelt wird, der die MPDUs sendet, und wobei das Bit in der Bitmap den Empfang von *n* MPDUs in derselben Gruppe bestätigt.

2. Verfahren (500) nach Anspruch 1, wobei jede MPDU (600) mit einer Anzeige empfangen wird, ob diese MPDU eine letzte MPDU in einer Gruppe ist oder nicht.

3. Verfahren (500) nach Anspruch 1, das weiter Folgendes aufweist:
Empfangen, von einer Vorrichtung, einer Gruppierungsnachricht, die die Gruppengröße *n* anzeigt; und
Senden, an die Vorrichtung, einer Bestätigungsnachricht, die den Empfang der Gruppierungsnachricht bestätigt.

4. Verfahren (500) nach Anspruch 1, wobei die Bitmap wenigstens ein Bit aufweist, das den Empfang einer letzten Gruppe bestätigt, die weniger als *n* MPDUs aufweist, wobei das Verfahren weiter Folgendes aufweist:
Bestimmen, dass die letzte Gruppe weniger als *n* MPDUs aufweist, basierend auf wenigstens einem von Folgendem: einer Detektion eines EOF-Abgrenzers (EOF = Ende des Rahmens bzw. end of frame) oder Detektion eines Endes von Daten.

5. Eine Vorrichtung (500A) für Drahtloskommunikationen, die Folgendes aufweist:
Mittel (502A) zum Empfangen einer Vielzahl von Medienzugriffssteuerungs-bzw. MAC-Protokolldateneinheiten bzw. MPDUs (MAC = media access control, MPDU = MAC protocol data unit) (600) von einem Node bzw. Knoten (110); und
Mittel (504A) zum Senden bzw. Übertragen einer Blockempfangsbestätigungs- bzw. BA-Nachricht (BA = block acknowledgement), wobei die BA-Nachricht eine Bitmap aufweist, die ein Bit zum Bestätigen eines Empfangs einer Gruppe von mehr als einer der MPDUs aufweist;
**dadurch gekennzeichnet, dass**:
eine Gruppengröße n mit dem Node ausgehandelt wird, der die MPDUs sendet, und wobei das Bit in der Bitmap den Empfang von n MPDUs in derselben Gruppe bestätigt.

6. Ein Verfahren (400) für Drahtloskommunikationen, das Folgendes aufweist:
Senden (402) einer Vielzahl von Medienzugriffssteuerungs- bzw. MAC-Protokolldateneinheiten bzw. MPDUs (MAC = media access control, MPDU = MAC protocol data unit) (600) an einen Node bzw. Knoten (120); und
Empfangen (404) einer Blockempfangsbestätigungs- bzw. BA-Nachricht (BA = block acknowledgement), wobei die BA-Nachricht eine Bitmap aufweist, die ein Bit zum Bestätigen eines Empfangs einer Gruppe von mehr als einer der MPDUs aufweist;
**dadurch gekennzeichnet, dass**:
eine Gruppengröße n mit dem Node ausgehandelt wird, der die MPDUs empfängt, und wobei das Bit in der Bitmap den Empfang von n MPDUs in derselben Gruppe bestätigt.

7. Verfahren (400, 500) nach Anspruch 1 oder 6, wobei das Bit bestätigt, dass jede MPDU der Gruppe erfolgreich empfangen wurde.

8. Verfahren (400, 500) nach Anspruch 1 oder 6,
wobei jede MPDU (600) mit einer Anzeige (608) empfangen oder gesendet wird, ob diese MPDU zu einer Gruppe gehört oder nicht und wobei die Bitmap wenigstens ein Bit aufweist, um individuell zu bestätigen, dass eine MPDU nicht zu einer Gruppe gehört, wobei vorzugsweise die Anzeige, ob jede MPDU zu einer Gruppe gehört oder nicht, in einem MPDU-Abgrenzerfeld (602) vorgesehen wird, das das Vorliegen einer Abgrenzererweiterung anzeigt, die eine VHT-Sequenznummer (VHT = very high throughput) aufweist, wobei die MPDUs derselben Gruppe dieselbe VHT-Sequenznummer haben, oder
wobei die Anzeige, ob jede MPDU zu einer Gruppe gehört oder nicht, in einem Fragmentfeld eines MAC-Headers vorgesehen ist und wobei das Fragment-Feld ein Bit (1602) aufweist, das anzeigt, ob eine MPDU eine letzte MPDU in einer Gruppe ist.

9. Verfahren (400, 500) nach Anspruch 1 oder 6, wobei MPDUs in derselben Gruppe zunehmende Sequenznummern haben oder wobei MPDUs in derselben Gruppe die gleiche Sequenznummer und unterschiedliche Subrahmensequenznummern haben.

10. Verfahren (400, 500) nach Anspruch 1 oder 6, wobei die Bitmap wenigstens ein Bit aufweist, das einen Empfang einer letzten Gruppe bestätigt, die weniger als n MPDUs aufweist.

11. Verfahren (400) nach Anspruch 6, das weiter Senden, für wenigstens eine Gruppe von *n* MPDUs, von *n - m* MPDUs, die Daten enthalten, und von *m* Null-MPDUs aufweist.

12. Verfahren (400, 500) nach Anspruch 1 oder 6, wobei die BA-Nachricht ein weiteres Bit aufweist, das anzeigt, dass eines oder mehrere Bits in der Bitmap verwendet werden, um Gruppen von n MPDUs zu bestätigen.

13. Vorrichtung (400, 500) nach Anspruch 1 oder 6, wobei die BA-Nachricht ein Gruppengrößenfeld aufweist, dass eine Anzahl von MPDUs anzeigt, die von dem Bit bestätigt werden.

14. Eine Vorrichtung (400A) für Drahtloskommunikationen, die Folgendes aufweist:
Mittel (402A) zum Senden einer Vielzahl von Medienzugriffssteuerungs- bzw.
MAC-Protokolldateneinheiten bzw. MPDUs (MAC = media access control,
MPDU = MAC protocol data unit) (600) an einen Node bzw. Knoten (120);
und
Mittel (404A) zum Empfangen einer Blockempfangsbestätigungs- bzw. BA-Nachricht (BA = block acknowledgement), wobei die BA-Nachricht eine Bitmap aufweist, die ein Bit zum Bestätigen eines Empfangs einer Gruppe von mehr als einer der MPDUs aufweist;
**dadurch gekennzeichnet, dass**:
eine Gruppengröße *n* mit dem Node ausgehandelt wird, der die MPDUs empfängt, und wobei das Bit in der Bitmap den Empfang von *n* MPDUs in derselben Gruppe bestätigt.

15. Ein Computerprogrammprodukt für Drahtloskommunikationen, das ein computerlesbares Medium aufweist, das Instruktionen aufweist, die ausgeführt werden können, um die Schritte nach einem der Ansprüche 1 bis 4 oder 6 bis 13 auszuführen.

## Revendications

1. Procédé (500) pour des communications sans fil, comprenant :
recevoir (502) une pluralité d'unités de données de protocole de contrôle d'accès au support, MAC, MPDU, (600) à partir d'un noeud (110) ; et
émettre (504) un message d'accusé de réception de bloc, BA, le message BA comprenant une carte de bits comprenant un bit pour accuser réception d'un groupe de plus d'un seul des MPDU ; **caractérisé en ce que** :
la taille de groupe n est négociée avec le noeud émettant les MPDU, et le bit se trouvant dans la carte de bits accuse réception de n MPDU dans le même groupe.

2. Procédé (500) selon la revendication 1, dans lequel chaque MPDU (600) est reçu avec une indication indiquant si ce MPDU est un dernier MPDU dans un groupe.

3. Procédé (500) selon la revendication 1, comprenant en outre :
recevoir, à partir d'un dispositif, un message de groupement indiquant la taille de groupe n ; et
envoyer, au dispositif, un message de confirmation confirmant la réception du message de groupement.

4. Procédé (500) selon la revendication 1, dans lequel la carte de bits comprend au moins un bit accusant réception d'un dernier groupe comprenant moins de n MPDU, dans lequel le procédé comprend en outre :
déterminer que le dernier groupe comprend moins de n MPDU sur la base d'au moins un élément parmi la détection d'un délimiteur de fin de trame, EOF, et la détection d'une fin de données.

5. Dispositif (500A) pour des communications sans fil, comprenant :
des moyens (502A) pour recevoir une pluralité d'unités de données de protocole de contrôle d'accès au support, MAC, MPDU, (600) à partir d'un noeud (110) ; et
des moyens (504A) pour émettre un message d'accusé de réception de bloc, BA, le message BA comprenant une carte de bits comprenant un bit pour accuser réception d'un groupe de plus d'un seul des MPDU ; **caractérisé en ce que** :
une taille de groupe n est négociée avec le noeud émettant les MPDU, et le bit se trouvant dans la carte de bits accuse réception de n MPDU dans le même groupe.

6. Procédé (400) pour des communications sans fil, comprenant :
émettre (402) une pluralité d'unités de données de protocole de contrôle d'accès au support (MAC), MPDU, (600) vers un noeud (120) ; et
recevoir (404) un message d'accusé de réception de bloc, BA, le message BA comprenant une carte de bits comprenant un bit pour accuser réception d'un groupe de plus d'un seul des MPDU ; **caractérisé en ce que** :
une taille de groupe n est négociée avec le noeud recevant les MPDU, et le bit se trouvant dans la carte de bits accuse réception de n MPDU dans le même groupe.

7. Procédé (400, 500) selon les revendications 1 ou 6, dans lequel le bit accuse réception en ce que chaque MPDU du groupe a été reçu avec succès.

8. Procédé (400, 500) selon les revendications 1 ou 6, dans lequel chaque MPDU (600) est reçu ou émis avec une indication (608) indiquant si ce MPDU appartient ou pas à un groupe et dans lequel la carte de bits comprend au moins un bit pour accuser réception individuellement d'un MPDU qui n'appartient pas à un groupe, dans lequel de préférence l'indication indiquant si chaque MPDU appartient ou pas à un groupe est fournie dans un champ de délimiteur de MPDU (602), indiquant la présence d'une extension de délimiteur comprenant un numéro de séquence à très haut débit, VHT, dans lequel des MPDU du même groupe ont le même numéro de séquence VHT, ou
dans lequel l'indication indiquant si chaque MPDU appartient ou pas à un groupe est fournie dans un champ de Fragment d'un en-tête MAC et dans lequel le champ de Fragment comprend un bit (1602) indiquant si un MPDU est le dernier MPDU d'un groupe.

9. Procédé (400, 500) selon les revendications 1 ou 6, dans lequel des MPDU du même groupe ont des numéros de séquence croissants ou dans lequel des MPDU du même groupe ont le même numéro de séquence et des numéros de séquence de sous-trame différents.

10. Procédé (400, 500) selon les revendications 1 ou 6, dans lequel la carte de bits comprend au moins un bit accusant réception d'un dernier groupe comprenant moins de n MPDU.

11. Procédé (400) selon la revendication 6, comprenant en outre l'émission, pour au moins un groupe de n MPDU, de n-m MPDU contenant des données et de m MPDU nuls.

12. Procédé (400, 500) selon les revendications 1 ou 6, dans lequel le message BA comprend un autre bit indiquant qu'un ou plusieurs bits dans la carte de bits sont utilisés pour accuser réception de groupes de n MPDU.

13. Procédé (400, 500) selon les revendications 1 ou 6, dans lequel le message BA comprend un champ de taille de groupe qui indique le nombre de MPDU dont le bit accuse réception.

14. Dispositif (400A) pour des communications sans fil, comprenant :
des moyens (402A) pour émettre une pluralité d'unités de données de protocole de contrôle d'accès au support (MAC), MPDU, (600) vers un noeud (120) ; et
des moyens (404A) pour recevoir un message d'accusé de réception de bloc, BA, le message BA comprenant une carte de bits comprenant un bit pour accuser réception d'un groupe de plus d'un seul des MPDU ; **caractérisé en ce que** :
une taille de groupe n est négociée avec le noeud recevant les MPDU, et le bit se trouvant dans la carte de bits accuse réception de n MPDU dans le même groupe.

15. Produit programme d'ordinateur pour des communications sans fil, comprenant un support lisible par un ordinateur comprenant des instructions exécutables pour réaliser les étapes de l'une quelconque des revendications 1 à 4 ou 6 à 13.
